# EUROPÄISCHE PATENTSCHRIFT

(11) **EP 1 584 881 B1**
(45) Veröffentlichungstag und Bekanntmachung des Hinweises auf die Patenterteilung: **11.05.2011**
(21) Anmeldenummer: 05005369.3
(22) Anmeldetag: 11.03.2005
(51) Int. Cl.: F27B 17/02, B28B 3/02, B28B 11/24, A61C 13/20

(54) **Pressofen sowie Zwischenkörper für einen Pressofen und Verfahren für den Betrieb eines Pressofens**
Press furnace, intermediate body for a press furnace and method of operating a press furnace
Four de moulage par compression ainsi qu'un corps intermédiaire pour un four de moulage par compression et procédé de fonctionnement d'un four de moulage par compression

(30) Priorität: 19.03.2004 DE 102004013668
(43) Veröffentlichungstag der Anmeldung: 12.10.2005
(73) Patentinhaber: Ivoclar Vivadent AG, 9494 Schaan (LI)
(72) Erfinder: Foser, Hans-Peter, 9496 Balzers (LI)
(74) Vertreter: Baronetzky, Klaus

(56) Entgegenhaltungen:
- EP-A- 0 231 773
- WO-A-01/32094
- JP-A- 11 285 505

## Beschreibung

Die Erfindung betrifft einen Pressofen sowie einen Zwischenkörper für einen Pressofen und ein Verfahren für den Betrieb eines Pressofens, gemäß dem Oberbegriff der Ansprüche 1, 18 und 22.

Ein derartiger Pressofen ist beispielsweise aus der EP-A1-231 773 bekannt. Bei einem derartigen Pressofen wird über einen Pressstempel ein im Wesentlichen scheiben-förmiger oder flachzylinder-förmiger Abdichtkolben nach unten gedrückt, der auf einen Rohling wirken soll, der durch den ausgeübten Druck schmilzt. Der Abdichtkolben ist aus Keramik und weist einen Durchmesser auf, der dem Durchmesser eines Einführkanals für den Rohling und den Pressstempel entspricht und daher etwas größer als der Durchmesser des Pressstempels ist. Auch der Rohling ist aus einer Keramik, die in ihrer Konsistenz und ihren Materialeigenschaften an das gewünschte Restaurationsergebnis angepasst wird.

Bei derartigen Pressöfen, aber auch bei Pressöfen ohne Abdichtkolben, bei denen also der Pressstempel unmittelbar an dem Rohling anliegt, besteht das Problem, dass der Pressstempel an der Keramik leicht haften bleibt. Bei der aus der genannten europäischen Offenlegungsschrift bekannten Lösung besteht zusätzlich das Problem, dass der Abdichtkolben mit dem Rohling durch den ausgeübten Druck bei der Verformungstemperatur der Keramik sich intensiv verbindet und somit nur durch aufwändige spanabhebende Bearbeitung wieder lösbar ist. Man muss dann praktisch mit einem Diamantschneider den gesamten Abdichtkolben abtrennen, was zeit- und verschleißintensiv ist. Die verwendeten keramischen Massen, gerade bei Verwendung von Zirkonoxidkeramiken, sind nämlich sehr hart und erfordern daher besonders qualifizierte Werkzeuge für die spanabhebende Bearbeitung.

Ein weiteres Problem besteht darin, dass der Pressstempel einen erheblichen Druck ausüben muss, damit die durch Temperaturerhöhung weich gewordene Keramik des Rohlings in die Verästelungen der Formhohlräume eindringt, in denen die Restaurationsteile ausgebildet werden sollen. Beim Plastifizierungsbeginn sinkt zunächst der auszuübende Druck erheblich, nimmt jedoch knapp vor dem Füllende stark zu. Dies führt zu einem signifikanten Druckanstieg, der insbesondere die Muffel stark belastet und dazu führen kann, dass Abplatzungen entstehen, die die geforderte Genauigkeit bei der Herstellung der Dentalrestaurationsteile verhindern.

Um die Wirkung dieses Druckanstiegs abzumildern, ist bereits eine Weg-/Zeitsteuerung vorgeschlagen worden, die bei Druckzunahme und damit geringerem Vortrieb des Pressstempels pro Zeiteinheit den Druck vermindern soll. Eine derartige Lösung erfordert allerdings eine ausgesprochen exakte und sehr rasch reagierende Regelung für den Pressstempelvortrieb. Derartige Systeme müssen auch teils die Totzeiten des Systems kompensieren und sind daher teuer.

Um dies zu verhindern, wurde bislang mit vergleichsweise geringer Vortriebsgeschwindigkeit gearbeitet. In neuerer Zeit wurden Versuche unternommen, die Vortriebsgeschwindigkeit zu erhöhen, um die Zykluszeit für die Bereitstellung des Zahnersatzteils zu verbessern. Dies bedingt eine noch aufwändigere Steuerung, wenn eine Weg-/Zeitmessung eingesetzt werden soll, um die zu befürchtende Druckspitze zu vermeiden.

Daher ist es auch bereits vorgeschlagen worden, anstelle einer Weg-/Zeitmessung eine Druckmessung des Drucks vorzunehmen, der von dem Pressstempel ausgeübt wird. Auch diese Lösung erfordert jedoch ebenfalls eine Totzeitkompensation in der Regelung, so dass sie aufwändig ist und insbesondere auch schwierig zu kalibrieren ist.

Daher wird üblicherweise die Vortriebsgeschwindigkeit des Pressstempels mindestens gegen das geschätzte Ende des Pressvorgangs abgesenkt. Nachdem die Lagehöhe des Rohlings in der Muffel sich von Fall zu Fall unterscheidet, wird auch in manchen Fällen über nahezu den gesamten Pressweg, oder auch über den gesamten Pressweg mit reduzierter Geschwindigkeit gearbeitet

Die Muffel wird mit bereits eingelegtem Rohling üblicherweise in einem sogenannten Vorwärmofen auf eine Vorwärmtemperatur gebracht. Nach dem Einsetzen der Muffel in den Pressofen fährt der relativ kalte Pressstempel nach unten und hat - entweder über den keramischen Abdichtkolben, der aber praktisch mit dem Keramikrohling verschmilzt, oder direkt- Kontakt mit dem Rohling, so dass es zu Spannungen kommt, zumal auch der Wärmeausdehnungskoeffizient des Pressstempels regelmäßig deutlich größer als der Wärmeausdehnungskoeffizient von Keramik ist.

Die JP 11 285505 A offenbart einen Pressofen für das Verpressen von Dentalmaterialien, wobei der Pressofen einen Pressstempel aus Keramik aufweist, welcher auf einem Rohling aus Dentalmaterial einwirkt, so dass das Dentalmaterial in eine Hohlform einer Muffel gepresst wird.

Aus der Druckschrift EP 0 231 773 A1 ist ein Ofen zur Herstellung von Zahnersatzteilen bekannt, mit einer Pressvorrichtung, welche eine Kolbenstange aufweist. Die Kolbenstange wirkt auf einen Abdichtkolben, durch welchen der Gußkanal verschlossen bleibt, und zwar stoßweise bis die zu verpressende Dentalmasse noch verformbar ist.

Die WO 01/32094 A offenbart einen Pressofen für das Verpressen von Dentalmaterialien, wobei der Pressofen einen Pressstempel und einen zwischen dem Pressstempel und einem zu verpressenden Rohling angeordneten Zwischenkörper aufweist. Es ist in dieser Druckschrift lediglich offenbart, dass der Zwischenkörper einen bestimmten Wärmeausdehnungskoeffizienten haben soll. Aus welchem Material der Zwischenkörper besteht und die Materialeigenschaften sind hier nicht näher angegeben.

Bei allen diesen bekannten Pressofen besteht das Problem, dass der Pressstempel oder auch der Zwischenkörper, welcher zwischen dem Pressstempel und der zu verpressenden Masse vorgesehen werden kann, sich mit dem Dentalmaterial verbindet und das Dentalmaterial an diesen haften bleibt. Dies beeinträchtigt die Vortriebsgeschwindigkeit des Pressstempels und verschlechtert die Qualität des Restaurats.

Daher liegt der Erfindung die Aufgabe zugrunde, einen Pressofen gemäß dem Oberbegriff von

Anspruch 1, einen Zwischenkörper gemäß dem Oberbegriff von Anspruch 18 sowie ein Verfahren für den Betrieb eines Pressofens gemäß dem Oberbegriff von Anspruch 22 zu schaffen, die einen raschen und spannungsarmen Presszyklus bei geringen Investitionskosten erlauben, wobei dennoch die Vortriebsgeschwindigkeit des Pressstempels des Pressofens nicht zu stark begrenzt sein soll.

Diese Aufgabe wird erfindungsgemäß durch die Ansprüche 1, 18 und 22 gelöst. Vorteilhafte Weiterbildungen ergeben sich aus den Unteransprüchen.

Der erfindungsgemäße Pressofen zeichnet sich durch die gezielte Verwendung eines Materials für den Zwischenkörper aus, das eine Härte von weniger als 150 MPa sowie eine geringere Wärmeleitfählgkeit als die des Rohlings aufweist, und zwar weniger als 1 W/m*K. Der Pressstempel ist dabei aus Metall hergestellt. Hierdurch ergibt sich eine deutliche Reduktion des abrupten Wärmeübergangs zwischen dem vorgewärmten Rohling und dem kalten Pressstempel. Überraschend lassen sich mit diesen Maßnahmen Spannungsrisse in dem Rohling aufgrund der plötzlichen Temperaturreduktion vermeiden. Während bislang verwendete Rohlinge aufgrund des intensiven Kontakts mit dem Pressstempel an ihrer dem Pressstempel zugewandten Seite derartige Spannungsrisse erfuhren, was dazu führte, dass dieser, der oberer Teil des Rohlings, nicht für Presszwecke eingesetzt werden konnte, lässt sich erfindungsgemäß eine gleichbleibende Materialqualität über den gesamten Rohling sicherstellen, auch wenn eine rasche Prozessdurchführung durchgenommen wird, wenn also dem kalten Pressstempel nicht Zeit gegeben wird, sich vorzuerwärmen.

Erindungsgemäß besonders günstig ist es auch, wenn des Material des Zwischenkörpers so gewählt ist, dass es eine geringere Härte als Keramik aufweist. Das Material muss sich nicht über die gesamte Höhe des Zwischenkörpers erstrecken; für die erwünschte Pufferwirkung reicht vielmehr eine Erstreckung über einen Teil, beispielsweise die Hälfte der Höhe, aus. Durch diese überraschend einfache Maßnahme lässt sich die Druckspitze, die durch den Pressstempel eingeleitet wird, drastisch reduzieren. Erfindungsgemäß besonders günstig ist es, dass auch die durch den Pressstempelantrieb selbst und dessen Masse eingeleitete Verzögerung (Totzeit) erfindungsgemäß kompensiert wird, denn der recht kleine Zwischenkörper puffert auch bei rascher Bewegung des Pressstempels dessen Trägheit ab.

Der erfindungsgemäße Zwischenkörper wirkt auch als Trennhilfe, denn durch die Realisierung eines sowohl von Keramik als auch von Metall verschiedenen Materials wird die Haftung, die zur Beschädigung der Muffel führen kann, aufgehoben, und beim Abkühlen und Lösen des Pressstempels ist auch die Neigung zu Spannungsrissen geringer. Hierbei können die guten Wärmedämmeigenschaften des Materials des Zwischenkörpers ausgenutzt werden; auch hier ist es im Grunde ausreichend, wenn wenigstens ein wesentlicher Teil des Zwischenkörpers aus dem Material mit der geringeren Härte besteht.

Günstig ist es, wenn die geringere Härte dazu führt, dass sich das Material des Zwischenkörpers im betrachteten Bereich durch die Wirkung der Druckzunahme elastisch oder gegebenenfalls auch plastisch verformt. Durch die Verformung wird die Spannungsspitze im Druckverlauf abgebaut, so dass es nicht zu den Muffelbeschädigungen kommt. Besonders günstig in diesem Zusammenhang ist es, wenn das Material etwas kompressibel ist. Die Einstellung des Elastizitätsmoduls wird bevorzugt so gewählt, dass praktisch keine nennenswerte Verformung während des Pressvorgangs selbst auftritt, während sich die Verformung gegen Ende des Pressvorgangs, also bei Druckzunahme, einstellt, um die Druckspitze abzubauen.

Alternativ ist es möglich, die Formfestigkeit eines nicht kompressiblen Materials für den Zwischenkörper so zu wählen, dass während des eigentlichen Pressvorgangs noch keine Verformung auftritt. Bei dieser alternativen Ausführungsform sind seitlich oder im Zwischenkörper Hohlräume vorgesehen, die durch die Verformung mit dem Material gefüllt werden. Ein Beispiel für eine derartige Lösung ist die Realisierung eines beispielsweise vier- oder sechseckigen Zwischenkörpers in einem kreisrunden Einführkanal für den Pressstempel. Durch die Verformung beim Pressende werden dann die zwischen dem Einführkanal und dem Zwischenkörper bestehenden Hohlräume gefüllt, ohne dass ein kompressibles Material für den Zwischenkörper erforderlich wäre.

Als Material für den Zwischenkörper kommt Asbest, Fliess, Brennwatte, ein Gel oder eine Paste in Betracht. Bei mindestens teilweise viskosen Materialien versteht es sich, dass eine Abdichtung in der erforderlichen Weise realisiert wird; insofern ist es günstig, wenn eine Art Hülle bereitgestellt wird, in der sich ein Gel, eine Paste oder beispielsweise ein pulverförmiges oder faserförmiges Medium befinden kann.

Die Härte des Materials, das einen wesentlichen Teil des Zwischenkörpers ausmacht, soll jedenfalls weniger als 150 MPa betragen. Dies kann beispielsweise durch die Überprüfung der Biegezugfestigkeit sichergestellt werden. Die Biegefestigkeit bei Zirkonoxidkeramik kann beispielsweise zwischen 80 und 200 N/mm2 liegen. Das weichere Material kann daher z. B. eine Biegefestigkeit von 10 bis 50 N/mm2 aufweisen.

Günstig ist es auch, wenn der Wärmeausdehnungskoeffizient des Zwischenkörpers recht gering ist, insbesondere deutlich geringer als der Wärmeaufdehnungskoeffizient des Einführkanals bzw. der Muffel, die ihn bildet. Hierdurch wird sichergestellt, dass nicht durch die Aufheizung Druck von innen auf die Wandung der Muffel ausgeübt wird, die die Reibung erhöhen würde.

Der Zwischenkörper kann auch an entweder dem Pressstempel oder dem Rohling über eine entsprechende Klebstoffschicht befestigt sein, so dass er beim Lösen des Pressstempels je dort haftet und eine saubere Trennung an der anderen Oberfläche realisiert wird.

In vorteilhafter Ausgestaltung ist es vorgesehen, dass die Wärmeleitfähigkeit des Zwischenkörpers kleiner als die des Rohlings und/oder als die des Pressstempels und/oder als die der Einbettmasse der Muffel ist.

In vorteilhafter Ausgestaltung ist es vorgesehen, dass die Wärmeleitfähigkeit des Zwischenkörpers weniger als 0,5 W/m*K beträgt und insbesondere weniger als 0,25 W/m*K. Durch derartig geringe Werte lassen sich Spannungsrisse im Rohling vermeiden.

In vorteilhafter Ausgestaltung ist es vorgesehen, dass der Zwischenkörper mindestens teilweise ein Material mit einer geringen Härte und/oder Festigkeit als Keramik aufweist und dass der Rohling insbesondere aus Keramik oder einer Metalllegierung besteht.

In vorteilhafter Ausgestaltung ist es vorgesehen, dass der Zwischenkörper mindestens eine Schicht aus einem Material mit einer geringeren Wärmeleitfähigkeit als das umgebende Material und insbesondere auch mit einer geringeren Härte aufweist. Beispielsweise kann der Zwischenkörper aus wenigstens zwei Materialien mit unterschiedlicher Härte zusammengesetzt sein und insbesondere eine äußere geschlossene Hülle aufweisen, deren Material sich von wenigstens einem weiteren Material des Zwischenkörper unterscheidet.

Die Realisierung mindestens eines wesentlichen Teils des Zwischenkörpers mit den gewünschten Materialeigenschaften ist ausreichend.

In vorteilhafter Ausgestaltung ist es vorgesehen, dass die Hülle aus einem bei der Verformungstemperatur des Rohlings brennbaren Material oder aus temperaturbeständigen Material besteht. Bei brennbarem Material kann sich der Zwischenkörper, soweit seine Hülle betroffen ist, nach Angleichung an die Betriebstemperatur verflüchtigen. Die Hülle kann der Aufrechterhaltung der Formstabilität des Zwischenkörpers dienen.

In vorteilhafter Ausgestaltung ist es vorgesehen, dass der Rohling aus einer Mischkeramik besteht, die mindestens auch Aluminiumoxid und/oder Magnesiumoxid aufweist und eine Wärmeleitfähigkeit zwischen 6 W/m*K und 30 W/m*K aufweist, oder eine Zirkonoxidkeramik mit einer Wärmeleitfähigkeit zwischen 1,5 und 3 W/m*K aufweist, und dass der Pressstempel aus Metall besteht und eine Wärmeleitfähigkeit von 80 bis 250 W/m*k aufweist. Bei diesen Werten ist es gewährleistet, dass eine deutlich geringere Wärmeleitfähigkeit des Zwischenkörpers besteht.

In vorteilhafter Ausgestaltung ist es vorgesehen, dass der Zwischenkörper an seiner dem Pressstempel zugewandten Seite eine glatte und schlecht haftende Oberfläche, insbesondere eine leicht ballige Oberfläche mit einem etwas geringeren Durchmesser als der Pressstempel, aufweist.

In vorteilhafter Ausgestaltung ist es vorgesehen, dass der Zwischenkörper mit dem Rohling oder mit dem Pressstempel verbunden ist und insbesondere auf einer seiner Stirnseite mit einem Klebstoff beschichtet ist und an dem Pressstempel oder dem Rohling bei der Ausübung von Druck anklebt.

In weiterer vorteilhafter Ausgestaltung ist es vorgesehen, dass der Zwischenkörper mit dem Rohling der dem Pressstempel formschlüssig oder reibschlüssig verbunden ist und gegebenenfalls eine runde Außenkontur aufweist, die im Wesentlichen der Innenkontur des Einführkanals entspricht.

In weiterer vorteilhafter Ausgestaltung ist es vorgesehen, dass der Zwischenkörper in seiner Außenform an die Außenform von Pressstempel und/oder Rohling angenähert ist und insbesondere einen runden oder vieleckigen Querschnitt hat.

In weiterer vorteilhafter Ausgestaltung ist es vorgesehen, dass der Zwischenkörper zylinderförmig oder scheibenförmig ausgebildet ist und seine Außenabmessungen an die Innenabmessungen eines Einführkanals für den Rohling in einer Muffel angepasst sind und dass der Zwischenkörper spielfrei in dem Einführkanal geführt ist.

In weiterer vorteilhafter Ausgestaltung ist es vorgesehen, dass der Zwischenkörper in seinem seitlichen Außenabmessungen an die seitlichen Außenabmessungen des Pressstempels und/oder des Rohling angenähert ist und insbesondere um weniges, bevorzugt um etwa 0,5% bis 10% des Durchmessers, geringere Außenabmessungen als diese aufweist.

Durch die spielfreie Lagerung des Zwischenkörpers ist gewährleistet, dass keine Erhöhung des Reibungsbeiwertes des Rohlings durch die Hinzufügung des Zwischenkörpers entsteht.

In vorteilhafter Ausgestaltung ist es vorgesehen, dass die Höhe des Zwischenkörper höchstens der Höhe des Rohlings entspricht und der Zwischenkörper einen Wärmeausdehnungskoeffizienten aufweist, der im Wesentlichen der Wärmeausdehnungskoeffizienten der den Einführkanal bildenden Muffel entspricht, und dass der Zwischenkörper einen Schmelzpunkt von mehr 900°C, insbesondere von mehr als 1200°C, aufweist, oder einen geringeren Wärmeausdehnungskoeffizienten als die einen Einführkanal umgebende Muffel aufweist.

Durch den geringeren Wärmeausdehnungskoeffizienten ist gewährleistet, dass der Zwischenkörper sich nicht an die Wandung des Einführkanals anpresst, wenn er erwärmt wird.

In vorteilhafter Ausgestaltung ist es vorgesehen, dass der Pressofen eine Zuführvorrichtung aufweist, mit welcher der Zwischenkörper unter dem Pressstempel bringbar ist. Die Zuführvorrichtung kann einen Schieber aufweisen, der im Wesentlichen auf der Höhe der Oberseite der Muffel angeordnet ist und mit welchem ein neuer Zwischenkörper in den Einführkanal einbringbar ist. Die Zuführvorrichtung kann ein Magazin für Zwischenkörper aufweist, das eine Vielzahl von Zwischenkörpern aufnehmen, von denen je einer von der Zuführvorrichtung erfassbar ist.

Durch die Zuführvorrichtung lässt sich auch ein automatischer Betrieb eines erfindungsgemäßen Pressofens realisieren.

In vorteilhafter Ausgestaltung ist es vorgesehen, dass der Zwischenkörper mindestens ein Material mit einer geringeren Härte oder Festigkeit als Keramik aufweist.

In weiterer vorteilhafter Ausgestaltung ist es vorgesehen, dass der Brennofen, die Notwendigkeit, einen Zwischenkörper einzuschieben, akustisch oder optisch signalisiert wird.

Weitere Vorteile, Einzelheiten und Merkmale ergeben sich aus der nachfolgenden Beschreibung mehrerer Ausführungsbeispiele anhand der Zeichnungen.

Es zeigen:
- Fig. 1: einen schematischen Schnitt durch einen Pressofen für die Verwendung in einem erfindungsgemäßen Verfahren;
- Fig. 2: eine Ausführungsform eines erfindungsgemäßen Zwischenkörpers;
- Fig. 3: eine weitere Ausführungsform eines erfindungsgemäßen Zwischenkörpers;
- Fig. 4: eine dritte Ausführungsform eines erfindungsgemäßen Zwischenkörpers; und
- Fig. 5 bis Fig. 8: unterschiedliche Ausgestaltungen von weiteren Ausführungformen von erfindungsgemäßen Zwischenkörpern.

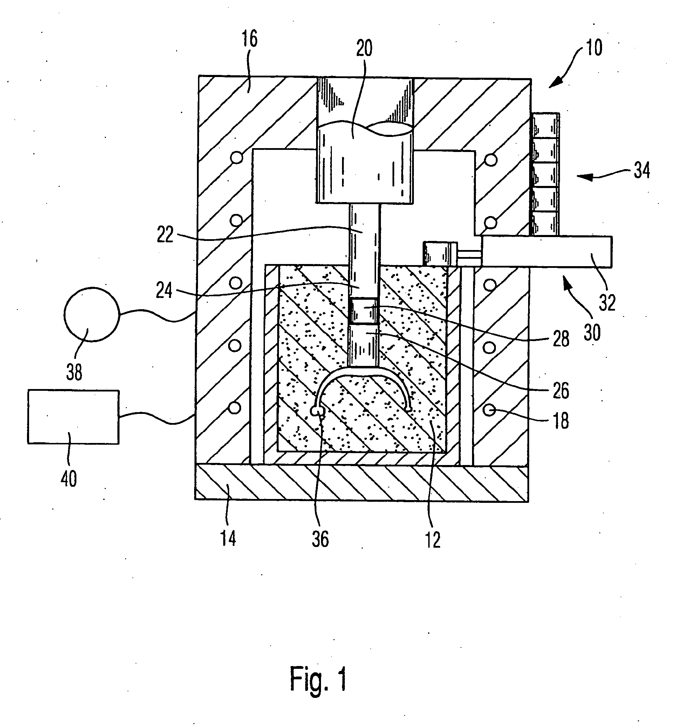

Der in Fig. 1 dargestellte Pressofen 10 ist für die Aufnahme einer Muffel 12 bestimmt. Er weist eine Basisplatte 14 und eine Ofenhaube 16 auf, die die Heizung 18 des Pressofens 10 aufnimmt. In der Ofenhaube 16 ist in an sich bekannter Weise zentral und von oben ein Presskolben 20 geführt, der in einen Pressstempel 22 übergeht, der in der Lage ist, in die Muffel 12, die einen Einführkanal 24 aufweist, einzudringen.

Für die Herstellung eines Dentalrestaurationsteils wird ein zylinderförmiger Rohling 26 in den Einführkanal eingebracht. Erfindungsgemäß wird anschließend an den Rohling 26 der erfindungsgemäße Zwischenkörper 28 in den Einführkanal 24 eingebracht, bevor der Pressstempel 22 nach unten gefahren wird.

Der Rohling 26 kann entweder aus einer keramischen Masse, beispielsweise aus einer Aluminiumoxidkeramik, einer Zirkonoxidkeramik oder Mischungen dieser bestehen, oder aber auch aus einer Metalllegierung.

In dem in Fig. 1 dargestellten Ausführungsbeispiel ist eine automatische Zuführvorrichtung 30 für Zwischenkörper 28 vorgesehen. Die Zuführvorrichtung 30 weist einen Schieber 32 auf, der durch die Haube 16 hindurch in einem Magazin 34 für die Zwischenkörper 28 gespeicherte Zwischenkörper verwendet. Der je unterste Zwischenkörper 28 wird erfasst und durch die Wirkung des Schiebers 32 bis zum Einführkanal 24 verbracht. Dort fällt er auf die Oberseite des Rohlings 26, wobei er bevorzugt einen geringeren Durchmesser als der Einführkanal 24 aufweist und daher selbsttätig die richtige, flachliegende Stellung einnimmt.

Der Zwischenkörper 28 ist in diesem Ausführungsbeispiel flachzylindrisch ausgebildet.

Beim Betrieb des erfindungsgemäßen Pressofens wird nun zunächst der Presskolben 20 in seiner oberen Stellung gehalten. Der Schieber ist in der zurückgefahrenen Position, so dass er die Unterseite des Maganzins 34 abdeckt.

Die Ofenhaube 16 wird angehoben, und zunächst wird die vorgewärmte Muffel 12 an die richtige Stelle unterhalb des Pressstempels 22 verbracht. Nach dem Schließen der Ofenhaube 16 wird zunächst der Schieber 26 betätigt, um einen Zwischenkörper 28 in den Einführkanal 24 einzubringen. Der Zwischenkörper 28 ruht dann lose auf dem Rohling 26 und erwärmt sich bereits, nachdem die Muffel 12 beispielsweise auf einen Wert von etwa 900°C vorerwärmt worden ist.

Der - eher noch kalte - Pressstempel 22 kann dann zeitgleich mit dem weiteren Erhitzen der Muffel 12 über die Heizung 18 abgesenkt werden. Es wird ein vorgegebener Druck ausgeübt, und sobald der Rohling 26 verformar wird, dringt der Pressstempel 22 weiter in den Einführkanal 24 ein. Die nunmehr verformbare Keramikmasse des Rohlings 26 verteilt sich in Formhohlräume 36 zur Ausbildung der Dentalrestaurationsteile, wobei die Formhohlräume 36 gegebenenfalls auch feingliedrig sein können.

In bevorzugter Ausgestaltung ist ein Vakuum-Pressofen vorgesehen. Bei einem derartigen Pressofen wird der Innenraum mit der Muffel 12 während des Aufheizvorgangs unter Unterdruck gesetzt, so dass in den Hohlräumen in der Muffel 12 Unterdruck herrscht. Durch den Unterdruck wird das Füllen der Formhohlräume 36 in an sich bekannter Weise erleichtert.

Bereits beim Auftreffen des Pressstempels 22 auf den Zwischenkörper 28 wird dieser um Weniges verformt. Sobald die Formhohlräume 36 vollständig mit dem Material des Rohlings 26 gefüllt sind, steigt der Gegendruck, der von der Muffel 12 auf den Pressstempel 22 ausgeübt wird, stark an, und zwar praktisch schlagartig. Diese schlagartige Druckzunahme wird durch den erfindungsgemäßen Zwischenkörper 28 abgemildert. Er verformt sich etwas weiter, so dass keine Druckspitze sondern eine lediglich steilere Druckzunahmekurve entsteht. Die Verformung selbst kann in beliebiger geeigneter Weise erfolgen, wozu auf die nachstehend beschriebenen verschiedenen Ausführungsformen des Zwischenkörpers zu verweisen ist.

Sobald der Zustand maximalen Drucks erreicht ist, wird der bestehende Druck auf den Presskolben 20 lediglich aufrechterhalten, so dass in an sich bekannter Weise eine Materialverfestigung der für den Rohling 26 verwendeten Keramik eintritt und Mikrohohlräume weiter geschlossen werden. Durch die Kombination von Druck und Temperatur schmelzen die Korngrenzen in der verwendeten Keramik, und in an sich bekannter Weise stellt sich das gewünschte Gefüge ein. Auch in diesem Zustand hält der erfindungsgemäße Zwischenkörper 28 den auf ihn ausgeübten Druck aufrecht und gibt ihn an die Masse des Keramikrohlings weiter.

In einer modifizierten Ausgestaltung erfolgt in diesem Zustand eine Volumenverminderung des Zwischenkörpers 28. Dies kann beispielsweise dadurch erreicht werden, dass als zusätzliches Material für den Zwischenkörper Brennwatte eingesetzt wird. Die Brennwatte ist dann bevorzugt so eingestellt, dass sie erst bei recht hoher Temperatur eine Volumenänderung erfährt und mindestens teilweise verbrennt. Hierdurch lässt sich gezielt der aufgebrachte Druck reduzieren, wobei es günstig ist, dass durch die Auflösung der Brennwatte zugleich auch die mechanische Verbindung aufgehoben wird. Insofern wirkt die Brennwatte des Zwischenkörpers zugleich auch als Trennhilfe.

Es ist bevorzugt, dass eine der Oberflächen des Zwischenkörpers 28, also entweder die untere Oberfläche oder die obere Oberfläche, so ausgestattet ist, dass ein Trennen dort nach Abschluss des Pressvorgangs vergleichsweise leicht möglich ist. Hierzu kann beispielsweise die betreffende Oberfläche des Zwischenkörpers poliert sein. Die obere Oberfläche kann auch mit einer metallischen Beschichtung versehen sein, die dicht an der Stirnfläche des Pressstempels 22 aufliegt.

Wie es aus Fig. 1 ersichtlich ist, sind für die Steuerung des erfindungsgemäßen Pressofens geeignete Signalisier- und Bedienungsvorrichtungen 38 und 40 vorgesehen. Es versteht sich, dass anstelle des manuellen Betätigen des Schiebers 32 auch eine automatische Beschickung mit dem erfindungsgemäßen Zwischenkörper möglich ist.

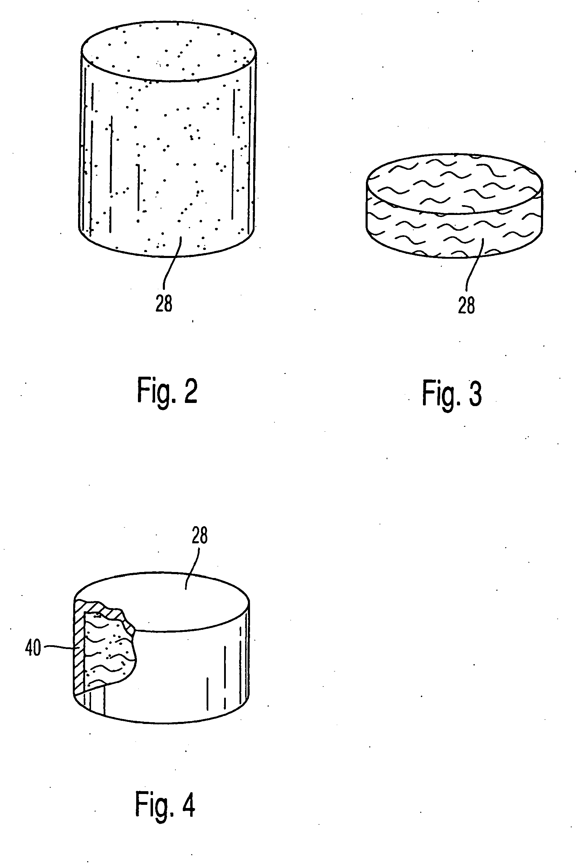

Aus Fig. 2 ist ein Zwischenkörper 28 ersichtlich, der aus gepresstem Pulver besteht. Ein derartiges Pulver kann einen ähnlichen Charakter wie eine Keramik haben, soll erfindungsgemäße jedoch eine geringere Härte aufweisen. Es ist auch möglich, beispielsweise die untere Hälfte des Zwischenkörpers 28 aus einem ausgesprochen weichen Material herzustellen und die obere Hälfte beispielsweise aus der gleichen Zirkonoxidkeramik, die für den Rohling 26 verwendet wird.

Die Ausführungsform des Zwischenkörpers 28 gemäß Fig. 3 weist zu einer Art Filz verpresste Fasern auf, die bereits bei der Presstemperatur veraschen. Die Asche wirkt dann als leichter komprimierbarer Zwischenkörper und ermöglicht auch eine leichte Trennung zwischen dem Pressstempel 22 und dem Dentalrestaurationsteil.

Aus Fig. 4 ist ein modifizierter Zwischenkörper 28 ersichtlich. Der Zwischenkörper 28 weist eine Hülle 40 auf, die ein Gemisch aus Pulvern und/oder Fasern umschließt und verformbar ist. Durch die Druckzunahme gegen Ende des Presszyklusses kann die Hülle aufplatzen, woraus sich die gewünschte Nachgiebigkeit ergibt. Es versteht sich, dass es anstelle dessen auch vorgesehen sein kann, dass die Hülle lediglich in sich verformbar ist, jedoch bei den vorliegenden Drücken und Temperaturen nicht zerstört wird.

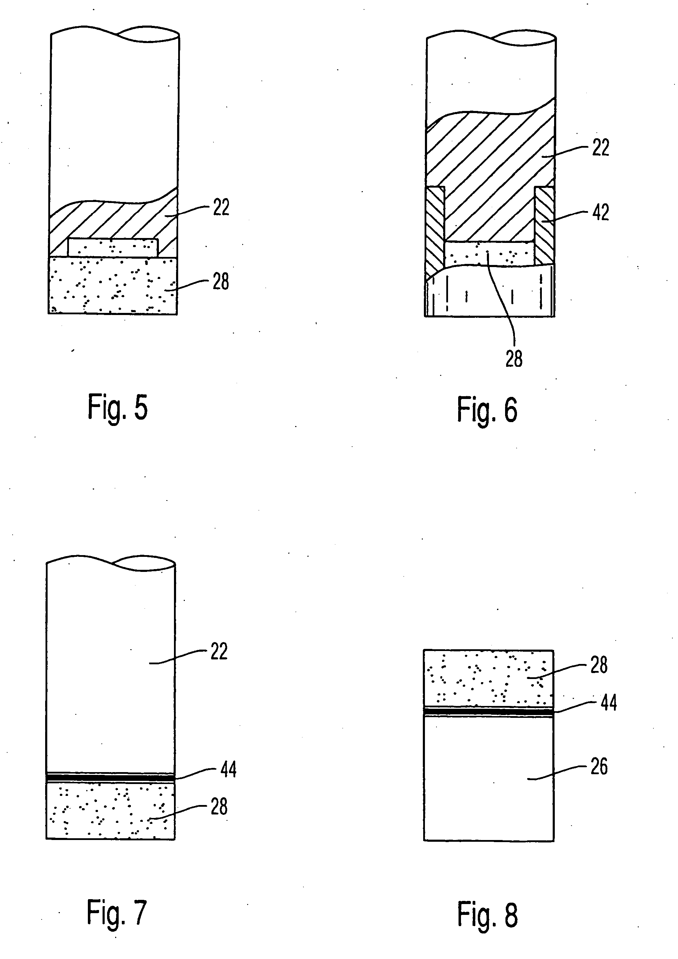

Aus den Figuren 5 und 6 sind Zwischenkörper 28 ersichtlich, die an dem Pressstempel 22 angebracht werden können. Hierzu ist die regelmäßig plane Stirnfläche des Pressstempels 22 modifiziert, in Fig. 5 durch eine Vertiefung, und in Fig. 6 durch eine Hülse 42, die das Material des Zwischenkörpers 28 formschlüssig halten.

Figuren 7 und 8 zeigen schematisch die Realisierung einer Klebeschicht 44, wobei die Klebeschicht 44 bei der Ausführungsform gemäß Fig. 7 zwischen dem Einpresskolben 22 und dem Zwischenkörper 28 vorgesehen ist, während sie bei der Ausführungsform gemäß Fig. 8 zwischen dem Zwischenkörper 28 und dem Keramikrohling 26 vorgesehen ist.

## Patentansprüche

1. Pressofen für das Verpressen von Dentalmaterialien, mit einem Pressstempel, mit welchem auf einen Rohling (26) in einer Einbettmasse einer Muffel (12) Druck ausübbar ist, mit einem Zwischenkörper (28), der eine Härte von weniger als 150 MPa aufweist, und der zwischen Pressstempel (22) und Rohling (26) einbringbar ist, wobei der Rohling (26) aus einer keramischen Masse oder einer Mischkeramik besteht,
**dadurch gekennzeichnet, dass** die Wärmeleitfähigkeit des Zwischenkörpers (28) kleiner als die des Rohlings (26) ist, und zwar weniger als 1 W/m*K beträgt, wobei der Pressstempel (22) aus Metall besteht

2. Pressofen nach Anspruch 1,
**dadurch gekennzeichnet, dass** die Wärmeleitfähigkeit des Zwischenkörpers (28) kleiner als die des Pressstempels (22) und/oder als die der Einbettmasse der Muffel (12) ist.

3. Pressofen nach Anspruch 1 oder 2,
**dadurch gekennzeichnet, dass** die Wärmeleitfähigkeit des Zwischenkörpers (28) weniger als 0,5 W/m*K und bevorzugt weniger als 0,25 W/m*K beträgt.

4. Pressofen nach einem der vorhergehenden Ansprüche,
**dadurch gekennzeichnet, dass** der Zwischenkörper (28) mindestens ein Material mit einer geringeren Wärmeleitfähigkeit und/oder einer geringeren Härte als das umgebende Material aufweist.

5. Pressofen nach einem der vorhergehenden Ansprüche, **dadurch gekennzeichnet, dass** der Zwischenkörper (28) mindestens teilweise aus einem Material besteht, welches eine geringere Härte und/oder Festigkeit als Keramik aufweist.

6. Pressofen nach einem der vorhergehenden Ansprüche,
**dadurch gekennzeichnet, dass** der Zwischenkörper (28) eine äußere geschlossene Hülle aufweist, deren Material sich von dem Material des Zwischenkörpers (28) unterscheidet.

7. Pressofen nach Anspruch 6,
**dadurch gekennzeichnet, dass** die Hülle (40) aus einem temperaturbeständigen oder bei der Verformungstemperatur des Rohlings (26) brennbaren Material besteht.

8. Pressofen nach einem der vorhergehenden Ansprüche,
**dadurch gekennzeichnet, dass** das Material, aus dem der Zwischenkörper (28) mindestens teilweise besteht, Asbest, Fliess, Brennwatte, ein Gel, eine Paste oder Kombinationen dieser ist

9. Pressofen nach einem der vorhergehenden Ansprüche,
**dadurch gekennzeichnet, dass**er Zwischenkörper (28) mit dem Rohling (26) oder mit dem Pressstempel (22) verbunden ist.

10. Pressofen nach einem der vorhergehenden Ansprüche,
**dadurch gekennzeichnet, dass** der Zwischenkörper (28) mit dem Rohling (26) oder dem Pressstempel (22) formschlüssig verbunden ist.

11. Pressofen nach einem der vorhergehenden Ansprüche,
**dadurch gekennzeichnet, dass** der Zwischenkörper (28) eine runde Außenkontur aufweist, die im Wesentlichen der Innenkontur eines Einführkanals (24) für den Rohling (26) in einer Muffel (12) oder der Außenform von Pressstempel (22) und/oder Rohling (26) entspricht.

12. Pressofen nach einem der vorhergehenden Ansprüche,
**dadurch gekennzeichnet, dass** der Zwischenkörper (28) zylinderförmig oder scheibenförmig ausgebildet ist.

13. Pressofen nach einem der vorhergehenden Ansprüche,
**dadurch gekennzeichnet, dass** die Höhe des Zwischenkörper (28) höchstens der Höhe des Rohlings (26) entspricht und einen Wärmeausdehnungskoeffizienten aufweist, der im Wesentlichen der Wärmeausdehnungskoeffizienten der den Einführkanal (24) bildenden Muffel (12) entspricht.

14. Pressofen nach einem der vorhergehenden Ansprüche,
**dadurch gekennzeichnet, dass** der Zwischenkörper (28) aus einem Material besteht, welches einen Schmelzpunkt von mehr 900°C, insbesondere von mehr als 1200°C, aufweist und im Wesentlichen einen gleichen oder geringeren Wärmeausdehnungskoeffizienten als die den Einführkanal (24) umgebenden Muffel (12) aufweist.

15. Pressofen nach einem der vorhergehenden Ansprüche,
**dadurch gekennzeichnet, dass** der Pressofen (10) eine Zuführvorrichtung (30) aufweist, mit welcher der Zwischenkörper (28) unter den Pressstempel (22) bringbar ist.

16. Pressofen nach Anspruch 15,
**dadurch gekennzeichnet, dass** die Zuführvorrichtung (30) einen Schieber (32) aufweist, der im Wesentlichen auf der Höhe der Oberseite der Muffel (12) angeordnet ist und mit welchem ein neuer Zwischenkörper (28) in den Einführkanal (24) einbringbar ist.

17. Pressofen nach einem der Ansprüche 15 oder 16,
**dadurch gekennzeichnet, dass** die Zuführvorrichtung (30) ein Magazin (34) für Zwischenkörper aufweist, das eine Vielzahl von Zwischenkörpern (28) aufnimmt, von denen je einer von der Zuführvorrichtung (30) erfassbar ist.

18. Zwischenkörper zur Verwendung in einem Pressofen, der dem Verpressen von erwärmten Dentalmaterial in Form eines Rohlings (26) in einer Muffel (12) dient, wobei der Zwischenkörper (28) zwischen dem Rohling (26) und einem Pressstempel (22) des Pressofens (10) einbringbar ist,
**dadurch gekennzeichnet, dass** der Zwischenkörper (28) eine Wärmeleitfählgkeit aufweist, die geringer als die Wärmeleitfähigkeit des Rohlings (26) ist, und zwar weniger als 1 W/m*K beträgt, wobei der Pressstempel (22) aus Metall besteht.

19. Zwischenkörper nach Anspruch 18,
**dadurch gekennzeichnet, dass** der Zwischenkörper (28) aus mindestens einem Material besteht, das eine geringere Härte oder Biegezugfestigkeit als Keramik aufweist.

20. Zwischenkörper nach Anspruch 18 oder 19,
**gekennzeichnet durch** die kennzeichnenden Merkmale eines der Ansprüche 2 bis 17.

21. Zwischenkörper nach einem der Ansprüche 18 bis 20,
**dadurch gekennzeichnet, dass** die Materialien des Zwischenkörpers in fenster, flüssiger, pulverförmiger, faseriger oder pastöser Form vorliegen.

22. Verfahren zum Betrieb eines Pressofens, der dem Verpressen von erwärmten Dentalmaterial in einer Muffel dient,
**dadurch gekennzeichnet, dass** vor einem Press-/Brenn-Zyklus des Pressofens (20) ein Zwischenkörper (28) zwischen einem Pressstempel (22) und einem Rohling (26) automatisch eingeschoben wird, wobei die Wärmeleitfähigkeit des Materials des Zwischenkörpers (28) geringer als die des Rohlings (26) ist, und zwar weniger als 1 W/m*K beträgt, wobei der Pressstempel (22) aus Metall besteht.

23. Verfahren nach Anspruch 22,
**dadurch gekennzeichnet, dass** die Wärmeleitfähigkeit des Zwischenkörpers (28) geringer als die des Pressstempels (22) und/oder als die der Einbettmasse der Muffel (12) ist.

24. Verfahren nach einem der Ansprüche 22 oder 23,
**dadurch gekennzeichnet, dass** der Brennofen, die Notwendigkeit, einen Zwischenkörper (28) einzuschieben, akustisch oder optisch signalisiert.

## Claims

1. A press oven for the pressing of dental material, said press oven comprising a press stamp via which pressure can be exerted on a blank (26) in an investment or embedding compound of a muffle, and an intermediate body (28) having a rigidity or hardness of less than 150 MPa and being insertable between the press stamp (22) and the blank (26), said blank (26) consisting of a ceramic mass or mixed ceramics;
**characterized in that** the thermal conductivity of the intermediate body (28) is less than that of the blank (26), in fact is less thant 1 W/m*K, wherein the press stamp (22) consists of a metal.

2. The press oven as claimed in claim 1,
**characterized in that** the thermal conductivity of the intermediate body (28) is less than that of the press stamp (22) and/or that of the investment or embedding compound of the muffle (12).

3. The press oven as claimed in claim 1 or 2,
**characterized in that** the thermal conductivity of the intermediate body (28) is less than 0.5 W/m*K and preferably less than 0.25 W/m*K.

4. The press oven as claimed in one of the preceding claims,
**characterized in that** the intermediate body (28) at least comprises one material with a thermal conductivity and/or a rigidity or hardness less than that of the surrounding material.

5. The press oven as claimed in one of the preceding claims,
**characterized in that** the intermediate body (28) at least partially consists of a material having a rigidity/hardness and/or strength/stability less than that of ceramic.

6. The press oven as claimed in one of the preceding claims,
**characterized in that** the intermediate body (28) comprises an outer closed casing whose material differs from the material of the intermediate body (28).

7. The press oven as claimed in claim 6,
**characterized in that** the casing (40) consists of a temperature resistant material or, alternatively, of a material that burns at deformation temperature of the blank (26).

8. The press oven as claimed in one of the preceding claims,
**characterized in that** the material of which the intermediate body (28) at least partiall consists, is asbestos, a non-woven material, a firing pillow, a gel, a paste, or a combination thereof.

9. The press oven as claimed in one of the preceding claims,
**characterized in that** the intermediate body (28) is connected to the blank (26) or to the press stamp (22)

10. The press oven as claimed in one of the preceding claims,
**characterized in that** the intermediate body (28) is connected in a form-fitting manner with the blank (26) or the press stamp (22).

11. The press oven as claimed in one of the preceding claims,
**characterized in that** the intermediate body (28) comprises a round outer contour that essentially corresponds to the inner contour of an inlet feed channel (24) for the blank (26) in a muffle (12), or to the outer shape of the press stamp (22) and/or the blank (26).

12. The press oven as claimed in one of the preceding claims,
**characterized in that** the intermediate body (28) is cylindrically shaped or disk shaped.

13. The press oven as claimed in one of the preceding claims,
**characterized in that** the intermediate body (28) has a height that, at most, corresponds to the height of the blank (16), and has a coefficient of thermal expansion that substantially corresponds to the coefficient of thermal expansion of the muffle (12) that forms the inlet feed channel (12).

14. The press oven as claimed in one of the preceding claims,
**characterized in that** the intermediate body (28) consists of a material that has a melting point of more than 900°C, in particular more than 1200°C, and substantially has a coefficient of thermal expansion that is identical or less than that of the muffle (12) surrounding the inlet feed channel (24).

15. The press oven as claimed in one of the preceding claims,
**characterized in that** the press oven (10) comprises a feeding device (30) via which the intermediate body (28) may be brought into a position under the press stamp (22).

16. The press oven as claimed in claim 15,
**characterized in that** the feeding device (30) comprises a pusher or feeder (32) that is substantially arranged at the height of the top side of the muffle (12) and with the aid of which a new or fresh intermediate body (28) can be inserted into the inlet feed channel (24).

17. The press oven as claimed in one of the claims 15 or 16,
**characterized in that** the feeding device (30) comprises a store (34) for intermediate bodies, said store (34) receiving a plurality of intermediate bodies (28) of which each individual one can be engaged or collected by the feeding device (30).

18. An intermediate body for use in a press oven that serves to press heated dental material in the form of a blank (26) in a muffle (12), said intermediate body (28) being insertable between the blank (26) and a press stamp (22) of the press oven (10),
**characterized in that** the intermediate body (28) has a thermal conductivity less than the thermal conductivity of the blank (26), and in fact is less than 1 W/m*K, wherein the pess stamp (22) consists of a metal.

19. The intermediate body as claimed in claim 18,
**characterized in that** the intermediate body (28) consists of at least one material that has a hardness or bending tensile strength less than that of ceramic.

20. The intermediate body as claimed in claim 18 or 19,
**characterized by** the characterizing features of one of the claims 2 to 17.

21. The intermediate body as claimed in one of the claims 18 to 20,
**characterized in that** the materials of the intermediate body are present in a solid form, a liquid form, a powder form, a fiber form or a paste form.

22. A method of operating a press oven which serves to press a heated dental material in a muffle,
**characterized in that** before a press/firing cycle of the press oven (20), an intermediate body (28) is automatically inserted between a press stamp (22) and a blank (26), wherein the thermal conductivity of the material of the intermediate body (28) is less than that of the blank (26), in fact is less than 1 W/m*K, and wherein the press stamp (22) consists of a metal.

23. The method as claimed in claim 22,
**characterized in that** the thermal conductivity of the intermediate body (28) is less than that of the press stamp (22) and/or that of the investment or embedding compound of the muffle (12).

24. The method as claimed in one of the claims 22 or 23,
**characterized in that** the firing oven signals the necessity to insert an intermediate body (28) in an acoustic or optical manner.

## Revendications

1. Four de pressée pour injecter du matériel dentaire, avec un piston de pression, avec lequel de la pression est exerçable sur un lingotin (26) dans un revêtement d'un moufle (12), avec un corps intermédiaire (28) qui présente une dureté de moins de 150 MPa et qui est insérable entre le piston de pression (22) et le lingotin (26), où le lingotin (26) est composé d'une masse céramique ou d'une céramique de mélange, **caractérisé en ce que** la conductibilité thermique du corps intermédiaire (28) est inférieure à celle du lingotin (26), c'est-à-dire, elle s'élève à moins de 1 W/m*K, où le piston de pression (22) est composé en métal.

2. Four de pressée selon la revendication 1, **caractérisé en ce que** la conductibilité thermique du corps intermédiaire (28) est inférieure à celle du piston de pression (22) et/ou celle du revêtement du moufle (12).

3. Four de pressée selon la revendication 1 ou 2, **caractérisé en ce que** la conductibilité thermique du corps intermédiaire (28) préfère moins de 0,25 W/m*K moins comme 0,25 W/m*K et s'élève.

4. Four de pressée selon l'une des revendications précédentes, **caractérisé en ce que** le corps intermédiaire (28) présente au moins un matériel avec une conductibilité thermique et/ou une dureté inférieures à celles du matériel entourant.

5. Four de pressée selon l'une des revendications précédentes, **caractérisé en ce que** le corps intermédiaire (28) est composé au moins en partie d'un matériel qui présente une dureté et/ou une fermeté inférieures à celles de la céramique.

6. Four de pressée selon l'une des revendications précédentes, **caractérisé en ce que** le corps intermédiaire (28) présente une gaine fermée extérieure dont le matériel est différent du matériel du corps intermédiaire (28).

7. Four de pressée selon la revendication 6, **caractérisé en ce que** la gaine (40) est composée d'un matériel résistant à la température ou inflammable à la température de déformation du lingotin (26).

8. Four de pressée selon l'une des revendications précédentes, **caractérisé en ce que** le matériel dont le corps intermédiaire (28) est au moins en partie composé est de l'amiante, du voile, de l'ouate, d'un gel, d'une pâte ou des combinaisons de ceux-ci.

9. Four de pressée selon l'une des revendications précédentes, **caractérisé en ce que** le corps intermédiaire (28) est connecté au lingotin (26) ou au piston de pression (22).

10. Four de pressée selon l'une des revendications précédentes, **caractérisé en ce que** le corps intermédiaire (28) est connecté par engagement positif au lingotin (26) ou au piston de pression (22).

11. Four de pressée selon l'une des revendications précédentes, **caractérisé en ce que** le corps intermédiaire (28) présente des contours externes ronds qui correspondent essentiellement aux contours internes d'un canal d'introduction (24) pour le lingotin (26) dans un moufle (12) ou la forme externe du piston de pression (22) et/ou le lingotin (26).

12. Four de pressée selon l'une des revendications précédentes, **caractérisé en ce que** le corps intermédiaire (28) est formé cylindrique ou en forme de disque.

13. Four de pressée selon l'une des revendications précédentes, **caractérisé en ce que** la hauteur du corps intermédiaire (28) correspond tout au plus à la hauteur du lingotin (26) et présente un coefficient de dilatation de chaleur qui correspond essentiellement aux coefficients de dilatation de chaleur du moufle (12) formant le canal d'introduction (24).

14. Four de pressée selon l'une des revendications précédentes, **caractérisé en ce que** le corps intermédiaire (28) se compose d'un matériel, présentant un point de fusion de plus de 900°C, de préférence de plus de 1200°C et présente essentiellement un coefficient de dilatation de chaleur identique ou inférieure à celui du moufle (12), entourant le canal d'introduction (24).

15. Four de pressée selon l'une des revendications précédentes, **caractérisé en ce que** le four de pressée (10) présente un enfourneur (30), avec lequel le corps intermédiaire (28) est plaçable sous le piston de pression (22).

16. Four de pressée selon la revendication 15, **caractérisé en ce que** l'enfourneur (30) présente un glisseur (32) qui est disposé essentiellement sur la hauteur de la surface supérieure du moufle (12) et avec lequel un nouveau corps intermédiaire est intoduisible (28) dans le canal d'introduction (24).

17. Four de pressée selon l'une des revendications 15 ou 16, **caractérisé en ce que** l'enfourneur (30) présente un stockage (34) pour corps intermédiaires, qui admet une multiplicité de corps intermédiaires (28), dont un seul à la fois est saisissable par l'enfourneur (30).

18. Corps intermédiaire pour l'utilisation dans un four de pressée qui sert à l'injection de matériel dentaire réchauffé sous la forme de lingotin (26) dans un moufle (12), où le corps intermédiaire (28) est introduisible entre le lingotin (26) et un piston de pression (22) du four de pressée (10), **caractérisé en ce que** le corps intermédiaire (28) présente une conductibilité thermique inférieure à la conductibilité thermique du lingotin (26), c'est-à-dire, elle s'élève à moins de 1 W/m*K, où le piston de pression (22) est composé en métal.

19. Corps intermédiaire selon la revendication 18, **caractérisé en ce que** le corps intermédiaire (28) est composé au moins d'un matériel qui présente une dureté ou une résistance à la traction de pliage inférieures à celle la céramique.

20. Corps intermédiaire selon l'une des revendications 18 ou 19, **caractérisé par** les caractéristiques typiques de l'une des revendications 2 à 17.

21. Corps intermédiaire selon l'une des revendications 18 à 20, **caractérisé en ce que** les matériaux du corps intermédiaire sont présentés sous forme solide, liquide, poudreuse, fibreuse ou pâteuse.

22. Procédure de fonctionnement d'un four de pressée qui sert à injecter du matériel dentaire réchauffé dans un moufle, **caractérisé en ce qu'**avant un cycle d'injection/cuisson du four de pressée (20), un corps intermédiaire (28) est inséré automatiquement entre un piston de pression (22) et un lingotin (26), où la conductibilité thermique du matériel du corps intermédiaire (28) est inférieure à celle du lingotin (26), c'est-à-dire, elle s'élève à moins de 1 W/m*K, où le piston de pression (22) est composé en métal.

23. Procédure selon la revendication 22, **caractérisé en ce que** la conductibilité thermique du corps intermédiaire (28) est inférieure à celle du piston de pression (22) et/ou celle du revêtement du moufle (12).

24. Procédure selon l'une des revendications 22 ou 23, **caractérisé en ce que** le four émet un signal acoustique ou optique pour signaler la nécessité d'insérer un corps intermédiaire (28).
